# EUROPEAN PATENT APPLICATION

(11) **EP 1 890 262 A1**
(43) Date of publication of application: **20.02.2008**
(21) Application number: 06017236.8
(22) Date of filing: 18.08.2006
(51) Int. Cl.: G06T 7/00

(54) **Virtual 3D models for display**

(71) Applicant: VALTION TEKNILLINEN TUTKIMUSKESKUS, 02150 Espoo (FI)
(72) Inventor: Honkamaa, Petri, 02150 Espoo (FI); Jäppinen, Jani, 02150 Espoo (FI); Woodward, Charles, 02150 Espoo (FI)
(74) Representative: Simmelvuo, Markku Kalevi

(57) **Abstract**

The invention allows providing virtual or simulated 3D models that can also be viewed with handheld devices of limited processing resources. A virtual 3D model is generated which comprises multiple 2D views of a 3D object, wherein each 2D view depicts the 3D object from a different viewing position. The virtual 3D model may then e.g. be transferred to a mobile camera phone and be displayed as embedded in a live video stream that is being shot and displayed with the camera phone.

## Description

### BACKGROUND OF THE INVENTION:

### Field of the Invention:

The invention relates to 3D modeling. In particular, the invention relates to providing virtual 3D models that can also be viewed with handheld devices of limited processing resources.

### Description of the Related Art:

Today, various graphical applications utilizing three-dimensional (3D) computer graphics are common in computer domain. 3D computer graphics involves three-dimensional representation of geometric data that is stored in a computer for the purposes of performing calculations and rendering two-dimensional (2D) images in real time. That is, each time a 3D model is moved or otherwise changed on the screen, the computer must calculate its new shape based on the stored geometric data and then render it on the screen as a 2D image. Herein, such 3D models will be referred to as "true 3D models".

These calculations are complex and require large amounts of processing power. Indeed, personal computers often have a graphical processing unit for performing such calculations in addition to a standard central processing unit.

Various handheld communication and computing devices, such as mobile telephones, smartphones, and personal digital assistants are developing rapidly. In particular, screens used in these handheld devices have increased in size and color depth thus allowing various graphical applications to emerge.

As a result, attempts have been made to introduce 3D computer graphics also to these handheld devices. However, since handheld devices have severely limited processing power, 3D computer graphics cannot be ported to them as such. As a result, these attempts have typically involved use of handheld device processor specific code optimization or dedicated graphical processing units. Yet, due to e.g. cost issues and lack of standardization, graphical processing units for handheld devices remain rare.

Furthermore, approaches based on clientserver architecture are known. A server is used to perform the calculations on the stored three-dimensional representation of geometric data and to render the 2D images. Each rendered 2D image is then transferred substantially in real time to a handheld device which then displays the received 2D image. Given that a 3D model typically changes several times every second, several new 2D images must be calculated, rendered and subsequently transferred to the handheld device every second. Therefore, these approaches require high-speed data connections for the handheld device in order to be practical.

Therefore, an object of the present invention is to alleviate the problems described above and to introduce a solution that allows providing 3D models also for handheld devices of limited processing resources by simulating true 3D models with a group of 2D views. A further object of the present invention is to introduce a solution that allows providing 3D models also for handheld devices with less than high-speed data connections. Herein, such simulations of true 3D models will be referred to as "virtual 3d models".

### SUMMARY OF THE INVENTION:

A first aspect of the present invention is a method of producing a virtual 3D model for display. First, a virtual 3D model is generated which virtual 3D model comprises multiple 2D views of a 3D object, wherein each 2D view depicts the 3D object from a different viewing position. Then, the generated virtual 3D model is stored so that it may later be retrieved for display.

A second aspect of the present invention is a method of reproducing a virtual 3D model. First, a virtual 3D model is retrieved which virtual 3D model comprises multiple 2D views of a 3D object, wherein each 2D view depicts the 3D object from a different viewing position. Then, the retrieved virtual 3D model is displayed by displaying at any given moment the 2D view of the multiple 2D views that is nearest to the viewing position at the given moment.

A third aspect of the present invention is an apparatus for producing a virtual 3D model for display. The apparatus of the third aspect comprises a virtual 3D model generator configured to generate a virtual 3D model which comprises multiple 2D views of a 3D object, wherein each 2D view depicts the 3D object from a different viewing position. The apparatus of the third aspect further comprises a storage configured to store the generated virtual 3D model.

A fourth aspect of the present invention is an apparatus for reproducing a virtual 3D model. The apparatus of the fourth aspect comprises a retriever configured to retrieve a virtual 3D model that comprises multiple 2D views of a 3D object, wherein each 2D view depicts the 3D object from a different viewing position. The apparatus of the fourth aspect further comprises a virtual 3D model player configured to display the retrieved virtual 3D model by displaying at any given moment the 2D view of the multiple 2D views that is nearest to the viewing position at the given moment.

A fifth aspect of the present invention is a computer program embodied on a computer readable medium. The computer program of the fifth aspect controls a data-processing device to perform the steps of:
generating a virtual 3D model comprising multiple 2D views of a 3D object, each 2D view depicting the 3D object from a different viewing position; and
storing the generated virtual 3D model for display retrieval.

A sixth aspect of the present invention is a computer program embodied on a computer readable medium. The computer program of the sixth aspect controls a data-processing device to perform the steps of:
retrieving a virtual 3D model comprising multiple 2D views of a 3D object, each 2D view depicting the 3D object from a different viewing position; and
displaying the retrieved virtual 3D model by displaying at any given moment the 2D view of the multiple 2D views that is nearest to the viewing position at the given moment.

In an embodiment of the invention, an existing true 3D model of the 3D object is converted into the multiple 2D views.

In an embodiment of the invention, photographs of the 3D object taken from multiple different viewing positions are utilized as the 2D views.

In an embodiment of the invention, illumination information about at least one 2D view of the multiple 2D views is included in the generated virtual 3D model.

In an embodiment of the invention, a portion of at least one 2D view of the multiple 2D views is made transparent.

In an embodiment of the invention, the generated virtual 3D model is compressed based on spatial redundancy between at least two 2D views of the multiple 2D views.

In an embodiment of the invention, at least one intermediate 2D view is generated by interpolating at least two 2D views of the multiple 2D views, and the generated at least one intermediate 2D view is included in the multiple 2D views of the generated virtual 3D model.

In an embodiment of the invention, interpolation information is generated to facilitate interpolating - subsequent to producing the virtual 3D model - at least two 2D views of the multiple 2D views, and the generated interpolation information is included in the generated virtual 3D model.

In an embodiment of the invention, the retrieved virtual 3D model is decompressed prior to displaying it in response to the retrieved virtual 3D model having been previously compressed based on spatial redundancy between at least two 2D views of the multiple 2D views.

In an embodiment of the invention, prior to displaying the retrieved virtual 3D model and in response to interpolation information included in the retrieved virtual 3D model, at least one intermediate 2D view is generated by interpolating at least two 2D views of the multiple 2D views in accordance with the included interpolation information, and the generated at least one intermediate 2D view is included in the multiple 2D views of the retrieved virtual 3D model.

In an embodiment of the invention, prior to displaying the retrieved virtual 3D model at least one of the following is performed: adjusting illumination of at least one 2D view of the multiple 2D views in accordance with illumination information included in the retrieved virtual 3D model; scaling at least one 2D view of the multiple 2D views in accordance with a given viewing distance; and rotating at least one 2D view of the multiple 2D views in accordance with a given rotation angle.

In an embodiment of the invention, a video stream is played with the retrieved virtual 3D model displayed embedded in the video stream.

In an embodiment of the invention, the video stream being played is analyzed and at least one of the following is performed based on the analysis: displaying the 2D view of the multiple 2D views nearest to the analyzed viewing position, generating and displaying an interpolated 2D view for the analyzed viewing position, adjusting illumination of the displayed 2D view accordingly, scaling the displayed 2D view accordingly, and rotating the displayed 2D view accordingly.

The invention removes the traditional bottleneck of processing 3D models quickly. The invention allows providing virtual or simulated 3D models that can be viewed also with handheld devices of limited processing resources. As a result, the invention allows a large variety of graphical applications utilizing these simulated 3D models. For example, various augmented reality -based applications for handheld devices are made possible by the invention. Furthermore, the invention allows providing virtual 3D models for handheld devices with low- and medium-speed data connections. Furthermore, the invention allows providing virtual 3D models for handheld devices of limited storage resources.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig 1** is a block diagram illustrating apparatuses for producing and reproducing a virtual 3D model for display according to an embodiment of the present invention, and
**Fig 2** is a diagram illustrating a method for producing and reproducing a virtual 3D model for display according to an embodiment of the present invention.

### DETAILED DESCRIPTION OF THE INVENTION

Reference will now be made in detail to the embodiments of the present invention, examples of which are illustrated in the accompanying drawings.

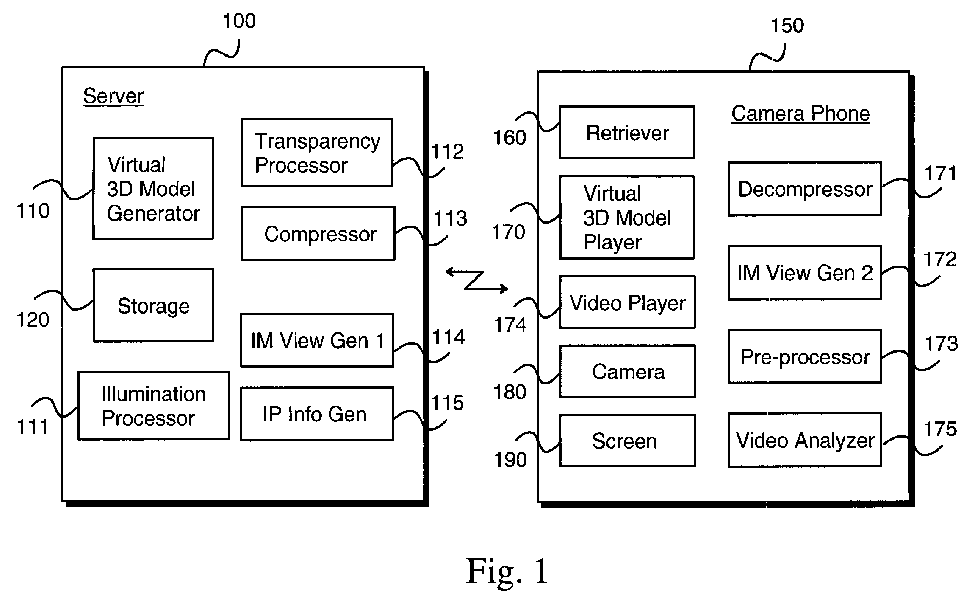

Figure 1 illustrates apparatuses for producing and reproducing a virtual 3D model for display according to an embodiment of the present invention. The embodiment of the invention illustrated in Figure 1 comprises an apparatus 100 for producing a virtual 3D model for display and an apparatus 150 for reproducing the virtual 3D model produced with the apparatus 100. While in the embodiment of Figure 1 the apparatus 100 and apparatus 150 are implemented as two separate devices, their functionalities may alternatively be implemented in a single device or in a larger set of devices. In the embodiment of Figure 1, the apparatus 100 is a server connected to Internet and the apparatus 150 is a mobile camera phone equipped with a wireless data connection, such as a General Packet Radio Service (GPRS) connection or a Wireless Local Area Network (WLAN) connection, allowing access to Internet. As a result, the camera phone 150 may access the server 100 for download purposes.

The server 100 comprises a virtual 3D model generator 110 that is configured to generate a virtual 3D model. The virtual 3D model is an inventive concept which simulates a true 3D model but requires significantly less processing power thus making it ideal for handheld devices of limited processing resources. Rather than geometric data on which calculations are performed to render 2D images in real time, the virtual 3D model of the invention comprises multiple 2D views of a 3D object, wherein each 2D view depicts the 3D object from a different viewing position. In other words, each 2D view in the virtual 3D model of the invention needs to be generated only once rather than each time the 3D model is moved or otherwise changed as is the case with conventional 3D computer graphics. Only minor modifications - such as scaling and rotating - requiring minimal processing power need to be made to these 2D views while they are being displayed.

It is to be understood that the term "viewing position" refers to at least viewing direction. Additionally, in some embodiments detailed below, it may also refer to viewing distance.

The 2D views in the virtual 3D model of the invention may be created by converting an already existing true or conventional 3D model of the 3D object into the 2D views of the invention. Alternatively, the 2D views in the virtual 3D model of the invention may be created by photographing the physical 3D object from multiple different viewing positions, in which case each photograph will constitute one 2D view of the invention.

When there is a sufficient amount of the above 2D views of the invention depicting the 3D object from different viewing positions, and when the virtual 3D model of the invention is displayed on a relatively small screen - such as those found on handheld devices, an illusion of a true 3D model is created. The user of the handheld device may e.g. turn around the displayed virtual 3D model of the invention using control keys on the handheld device and the virtual 3D model will appear to turn around similarly to a true 3D model.

Furthermore, the virtual 3D model generator 110 may be configured to adjust brightness and/or contrast for at least one 2D view. Furthermore, the virtual 3D model generator 110 may be configured to reduce at least one of the 2D views in resolution. A typical handheld device has a relatively low resolution screen so reducing the resolution of the 2D views would typically not result in lesser perceived quality.

In the embodiment of Figure 1, the server 100 further comprises an illumination processor 111 that is configured to include illumination information in the virtual 3D model. The illumination information relates to at least one 2D view of the multiple 2D views. The illumination information may include e.g. information about predetermined light sources (e.g. intensity and color) and their effect on each pixel of the at least one 2D view. By later utilizing the illumination information with the camera phone 150 or a similar handheld device of the invention, the intensity and color of light sources may be adjusted while displaying the 2D views because the illumination information indicates how each light source affects pixels of the at least one 2D view.

In the embodiment of Figure 1, the server 100 further comprises a transparency processor 112 that is configured to make a portion of at least one 2D view of the multiple 2D views transparent. For example, if the 2D views of the inventions are created from photographs depicting a 3D object, everything else apart from the 3D object may be made transparent. The transparency may be implemented by utilizing an alpha channel which is often supported by compression algorithms. As an example, Portable Network Graphics (PNG) supports an alpha channel.

Alternatively, a portion of at least one 2D view of the multiple 2D views may be made transparent beforehand. For example, if photographs constitute the 2D views, a portion (e.g. everything else apart from the actual 3D object depicted in the photograph) of at least one of the photographs may be made transparent before it is input to the virtual 3D model generator 110 of the invention.

In the embodiment of Figure 1, the server 100 further comprises a compressor 113 that is configured to compress the generated virtual 3D model based on spatial redundancy between at least two 2D views of the multiple 2D views. Typically, two adjacent 2D views of the invention will resemble each other, and this redundancy may be utilized to compress the overall size of the virtual 3D model. For example, the virtual 3D model may be arranged into a video sequence in which the multiple 2D views constitute video frames. There is a wide variety of compression algorithms that may be used to compress such a video sequence of the multiple 2D views, and many of these compression algorithms are supported by e.g. a typical camera phone. As an example, many camera phones support a multimedia format called 3GP wherein MPEG-4 or H.263 is used to compress video.

In the embodiment of Figure 1, the server 100 further comprises a first intermediate view generator 114 configured to generate at least one intermediate 2D view by interpolating at least two 2D views of the multiple 2D views, and to include the generated at least one intermediate 2D view in the multiple 2D views of the generated virtual 3D model. Creating intermediate 2D views and adding them to the virtual 3D model is useful e.g. when the number of original 2D views is limited, such as when the 2D views are generated by photographing a 3D object.

The intermediate 2D view generation may be simplified by including preprocessed information about equivalent pixels in two adjacent 2D views. This information may be stored and subsequently utilized in searching for those pixels in the two adjacent 2D views as a combination of which each pixel in the corresponding intermediate 2D view will be generated.

In the embodiment of Figure 1, the server 100 further comprises an interpolation information generator 115 configured to generate interpolation information to facilitate interpolating at least two 2D views of the multiple 2D views, and to include the generated interpolation information in the generated virtual 3D model, wherein the actual interpolation will be performed later, e.g. by the second intermediate view generator 172 arranged in the camera phone 150.

In the embodiment of Figure 1, the server 100 further comprises a storage 120 configured to store the generated virtual 3D model. The storage 120 included in the server 100 may be permanent in the sense that it is used as a storage from which the generated virtual 3D model is downloaded or otherwise retrieved. Alternatively, the storage 120 included in the server 100 may be temporary in the sense that it is used for storing the generated virtual 3D model temporarily before transferring it to a permanent download or retrieval storage, such as a web server (not illustrated). For example, a memory circuit in the server 100 may constitute such a temporary storage 120.

The virtual 3D model generator 110, the illumination processor 111, the transparency processor 112, the compressor 113, the first intermediate view generator 114 and the interpolation information generator 115 may be implemented as software, hardware, or a combination of software and hardware. Furthermore, they may be implemented as separate entities of software or hardware, as illustrated in Figure 1, or at least two of them may be combined into a singular entity of software or hardware, as a person skilled in the art will appreciate.

As described above, the apparatus 150 is a mobile camera phone in the embodiment of Figure 1. Thus, it comprises a digital camera 180 configured to shoot video as well as still pictures. The mobile camera phone 150 further comprises a screen 190 for displaying e.g. the video stream and still pictures. The video stream may be shot first and then viewed, or the video stream may be viewed on the screen live while it is being shot. It is to be understood that the apparatus 150 need not to be a mobile camera phone, however. For example, the apparatus 150 may be a personal digital assistant or a mobile phone without a digital camera.

In the embodiment of Figure 1, the mobile camera phone 150 further comprises a retriever 160 configured to retrieve the above described virtual 3D model. The retriever 160 may be configured to download the generated virtual 3D model from the storage 120 or from another download storage in a web server over the Internet. Alternatively, if the functionalities included in the apparatus 150 and the apparatus 100 are implemented in a single device, the retriever 160 may be configured to fetch the generated virtual 3D model directly from the storage 120 which in that case may be e.g. a memory circuit in the single device.

In the embodiment of Figure 1, the mobile camera phone 150 further comprises a virtual 3D model player 170 configured to display the retrieved virtual 3D model by displaying at any given moment the 2D view of the multiple 2D views that is nearest to the viewing position at this given moment. The user of the mobile camera phone 150 may change the viewing position e.g. with pre-assigned control keys (not illustrated) of the mobile camera phone 150. In response, a corresponding 2D view of the multiple 2D views will be displayed, thus creating an illusion of a true 3D model being turned around.

In the embodiment of Figure 1, the mobile camera phone 150 further comprises a decompressor 171 that is configured to decompress the retrieved virtual 3D model prior to its display in response to the retrieved virtual 3D model having previously been compressed e.g. by the compressor 113. The decompressor 171 may be configured to decompress all the compressed 2D views of the retrieved virtual 3D model at the same time. Alternatively, the decompressor 171 may be configured to decompress the compressed 2D views of the retrieved virtual 3D model e.g. a few at a time, as needed.

In the embodiment of Figure 1, the mobile camera phone 150 further comprises a second intermediate view generator 172 that is configured to generate, prior to the display of the retrieved virtual 3D model and in response to interpolation information (previously generated by the interpolation information generator 115) included in the retrieved virtual 3D model, at least one intermediate 2D view by interpolating at least two 2D views of the multiple 2D views in accordance with the included interpolation information, and to include the generated at least one intermediate 2D view in the multiple 2D views of the retrieved virtual 3D model.

In the embodiment of Figure 1, the mobile camera phone 150 further comprises a pre-processor 173 that is configured to perform - prior to the display of the retrieved virtual 3D model - at least one of adjusting illumination of at least one 2D view of the multiple 2D views in accordance with illumination information included in the retrieved virtual 3D model; scaling at least one 2D view of the multiple 2D views in accordance with a given viewing distance (which may be input e.g. by the user with pre-assigned control keys of the mobile camera phone 150); and rotating at least one 2D view of the multiple 2D views in accordance with a given rotation angle (which may be input e.g. by the user with pre-assigned control keys of the mobile camera phone 150).

In other words, scaling is used to simulate distance. For example, if, while viewing a given 2D view of the 3D model, the user presses a control key assigned to move the displayed virtual 3D model farther away, the given 2D view is scaled down, thus creating an illusion of the given 2D view moving farther away. Correspondingly, if, while viewing the given 2D view of the 3D model, the user presses a control key assigned to move the displayed virtual 3D model closer, the given 2D view is scaled up, thus creating an illusion of the given 2D view moving closer.

Although the present invention proposes to simulate a 3D model viewed at different distances mainly by scaling the 2D views, there may be some 3D objects for which changes in perspective are difficult to approximate by scaling only. E.g. for such 3D objects, it may be beneficial to include in the virtual 3D model (already comprising 2D views from different viewing directions, as described above) also two or more 2D views from a same viewing direction but from different viewing distances.

Correspondingly, while viewing a given 2D view of the 3D model, if the user presses a control key assigned to rotate the displayed virtual 3D model to the right, the given 2D view is rotated to the right. The desired angle of rotation may be indicated e.g. by the duration of the key press. For example, the longer the key is being pressed, the greater the angle of rotation.

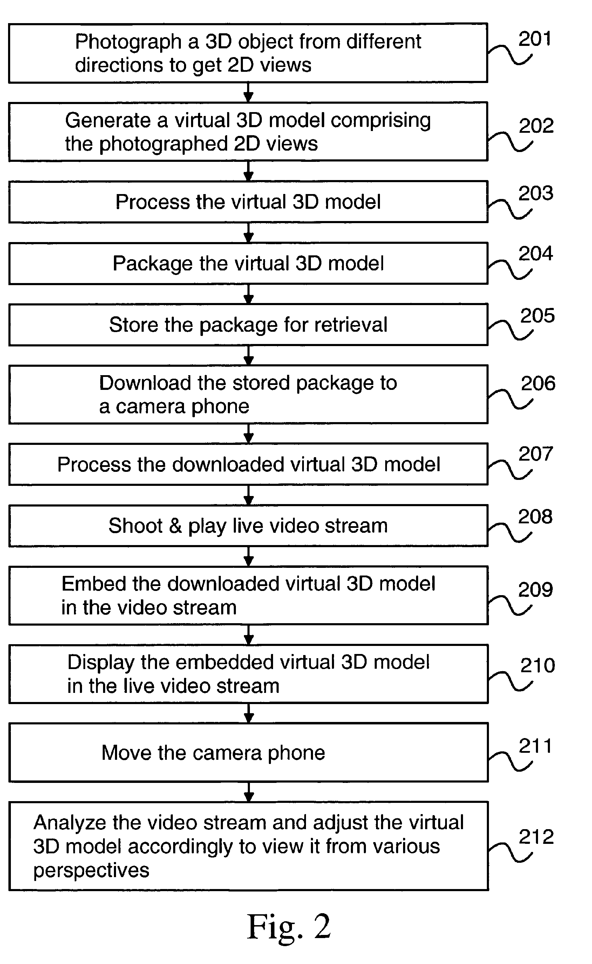

In the embodiment of Figure 1, the mobile camera phone 150 further comprises a video player 174 that is configured to play a video stream on screen 190 with the retrieved virtual 3D model displayed embedded in the video stream. As described above, the video stream may be a live one that is being shot with the camera 180, or the video stream may be a prerecorded one. As a result of embedding the virtual 3D model, it appears to be a part of the video stream displayed on the screen 190. This feature is useful e.g. in augmented reality applications, as described below in more detail in connection with Figure 2.

In the embodiment of Figure 1, the mobile camera phone 150 further comprises a video analyzer 175 that is configured to periodically analyze the video stream being played on the screen 190 and to perform at least one of displaying the 2D view of the multiple 2D views nearest to the analyzed viewing position, generating and displaying an interpolated 2D view for the analyzed viewing position, adjusting illumination of the displayed 2D view accordingly, scaling the displayed 2D view accordingly, and rotating the displayed 2D view accordingly. For example, if it is detected that the viewing position associated with the video stream being displayed is pulled away, the displayed 2D view will be scaled down accordingly.

The retriever 160, the virtual 3D model player 170, the decompressor 171, the second intermediate view generator 172, the pre-processor 173, the video player 174, and the video analyzer 175 may be implemented as software, hardware, or a combination of software and hardware. For example, at least one of the above elements of the camera phone 150 may be implemented as Java Platform, Micro Edition (Java ME) software. Furthermore, they may be implemented as separate entities of software or hardware, as illustrated in Figure 1, or at least two of them may be combined into a singular entity of software or hardware, as a person skilled in the art will appreciate.

Figure 2 illustrates a method according to an embodiment of the present invention. In particular, Figure 2 illustrates an embodiment used for augmented reality. First, a furniture dealer photographs a physical chair from multiple different viewing positions, step 201. Each photograph taken will then constitute one 2D view of the multiple 2D views of the 3D model about to be generated. Next, at step 202, the virtual 3D model is generated which comprises the photographed 2D views.

Step 203 is an optional step in which e.g. illumination information about at least one of the photographed 2D views may be included, as described in more detail above in connection with Figure 1. Also, a portion of at least one of the photographed 2D views may be made transparent at step 203, as described in more detail above in connection with Figure 1. Furthermore, the generated virtual 3D model may optionally be compressed at step 203 based on spatial redundancy between at least two of the photographed 2D views, as described in more detail above in connection with Figure 1.

Furthermore, at least one intermediate 2D view may be generated at step 203 by interpolating at least two of the photographed 2D views, and including the generated at least one intermediate 2D view in the multiple 2D views of the generated virtual 3D model, as described in more detail above in connection with Figure 1.

Furthermore, interpolation information may be generated at step 203 to facilitate interpolating (later at step 207) at least two 2D views of the multiple 2D views, and including the generated interpolation information in the generated virtual 3D model, as described in more detail above in connection with Figure 1.

Then, the generated virtual 3D model is packaged and stored for retrieval, steps 204-205. The packaging may comprise e.g. using a known file packaging format, such as ZIP file format. Furthermore, the package may be stored e.g. on a web server associated with the furniture dealer.

At step 206, a user considering purchasing the chair downloads the stored package to a camera phone in order to virtually try it out. The user may be viewing a web site of the furniture dealer with a web browser arranged in the camera phone and download the stored package directly from there. Alternatively, the furniture dealer may attach e.g. a bar code or a matrix code in the chair which code comprises a download link to the package, so that when the user visits the furniture dealer, the user can read the code off the chair with the camera phone (equipped with suitable code reading software) and then download the package with the camera phone. Alternatively, a similar a bar code or a matrix code may be printed e.g. in a magazine ad or in a furniture catalogue published by the furniture dealer.

When the user has downloaded (and unpacked) the package into the camera phone, the downloaded and unpacked virtual 3D model may optionally be processed at step 207 to prepare it for use. For example, the downloaded and unpacked virtual 3D model may be decompressed if it was compressed at step 203.

Furthermore, in response to interpolation information included in the downloaded virtual 3D model, at least one intermediate 2D view may be generated at step 207 by interpolating at least two of the 2D views in accordance with the included interpolation information, and including the generated at least one intermediate 2D view in the 2D views of the downloaded virtual 3D model.

Next, the user starts shooting video of the room for which the chair is intended, step 208. The room can be viewed on the screen of the camera phone. Next, the downloaded virtual 3D model depicting the chair is embedded in the video stream, step 209. Furthermore, at least one of the following may be performed e.g. at step 209: adjusting illumination of at least one of the 2D views in accordance with illumination information included at step 203 in the downloaded virtual 3D model; scaling at least one of the 2D views in accordance with a given viewing distance (input e.g. with pre-assigned control keys of the camera phone); and rotating at least one of the 2D views in accordance with a given rotation angle (input e.g. with pre-assigned control keys of the camera phone).

At step 210, the embedded virtual chair is displayed in the video stream of the room. At step 211, the user moves the camera phone. At step 212 the video is analyzed and the virtual 3D model is adjusted accordingly to allow seeing how the chair would actually look like in the room.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A method of producing a virtual 3D model for display, **characterized in that** the method comprises:
generating a virtual 3D model comprising multiple 2D views of a 3D object, each 2D view depicting the 3D object from a different viewing position; and
storing the generated virtual 3D model for display retrieval.

2. The method according to claim 1, **characterized in that** the step of generating comprises converting an existing true 3D model of the 3D object into the multiple 2D views.

3. The method according to claim 1, **characterized in that** the step of generating comprises utilizing photographs of the 3D object from multiple different viewing positions as the 2D views.

4. The method according to claim 1, **characterized in that** the method further comprises including in the generated virtual 3D model illumination information of at least one 2D view of the multiple 2D views.

5. The method according to claim 1, **characterized in that** the method further comprises making a portion of at least one 2D view of the multiple 2D views transparent.

6. The method according to claim 1, **characterized in that** the method further comprises compressing the generated virtual 3D model based on spatial redundancy between at least two 2D views of the multiple 2D views.

7. The method according to claim 1, **characterized in that** the method further comprises generating at least one intermediate 2D view by interpolating at least two 2D views of the multiple 2D views, and including the generated at least one intermediate 2D view in the multiple 2D views of the generated virtual 3D model.

8. The method according to claim 1, **characterized in that** the method further comprises generating interpolation information to facilitate interpolating - subsequent to producing the virtual 3D model - at least two 2D views of the multiple 2D views, and including the generated interpolation information in the generated virtual 3D model.

9. A method of reproducing a virtual 3D model, **characterized in that** the method comprises:
retrieving a virtual 3D model comprising multiple 2D views of a 3D object, each 2D view depicting the 3D object from a different viewing position; and
displaying the retrieved virtual 3D model by displaying at any given moment the 2D view of the multiple 2D views nearest to the viewing position at said given moment.

10. The method according to claim 9, **characterized in that** the method further comprises decompressing the retrieved virtual 3D model prior to displaying it in response to said retrieved virtual 3D model having been compressed based on spatial redundancy between at least two 2D views of the multiple 2D views.

11. The method according to claim 9, **characterized in that** the method further comprises generating, prior to displaying the retrieved virtual 3D model and in response to interpolation information included in the retrieved virtual 3D model, at least one intermediate 2D view by interpolating at least two 2D views of the multiple 2D views in accordance with the included interpolation information, and including the generated at least one intermediate 2D view in the multiple 2D views of the retrieved virtual 3D model.

12. The method according to claim 9, **characterized in that** the method further comprises performing prior to displaying the retrieved virtual 3D model at least one of:
adjusting illumination of at least one 2D view of the multiple 2D views in accordance with illumination information included in the retrieved virtual 3D model;
scaling at least one 2D view of the multiple 2D views in accordance with a given viewing distance; and
rotating at least one 2D view of the multiple 2D views in accordance with a given rotation angle.

13. The method according to claim 9, **characterized in that** the step of displaying the retrieved virtual 3D model comprises playing a video stream with the retrieved virtual 3D model displayed embedded in the video stream.

14. The method according to claim 13,
**characterized in that** the method further comprises analyzing the video stream being played and performing at least one of displaying the 2D view of the multiple 2D views nearest to the analyzed viewing position, generating and displaying an interpolated 2D view for the analyzed viewing position, adjusting illumination of the displayed 2D view accordingly, scaling the displayed 2D view accordingly, and rotating the displayed 2D view accordingly.

15. An apparatus (100) for producing a virtual 3D model for display, **characterized in that** the apparatus (100) comprises:
a virtual 3D model generator (110) configured to generate a virtual 3D model comprising multiple 2D views of a 3D object, each 2D view depicting the 3D object from a different viewing position; and
a storage (120) configured to store the generated virtual 3D model.

16. The apparatus according to claim 15, **characterized in that** the virtual 3D model generator (110) is further configured to perform the generation of the virtual 3D model by converting an existing true 3D model of the 3D object into the multiple 2D views.

17. The apparatus according to claim 15, **characterized in that** the virtual 3D model generator (110) is further configured to perform the generation of the virtual 3D model by utilizing photographs of the 3D object from multiple different viewing positions, as the 2D views.

18. The apparatus according to claim 15, **characterized in that** the apparatus (100) further comprises an illumination processor (111) configured to include in the virtual 3D model illumination information of at least one 2D view of the multiple 2D views.

19. The apparatus according to claim 15, **characterized in that** the apparatus (100) further comprises a transparency processor (112) configured to make a portion of at least one 2D view of the multiple 2D views transparent.

20. The apparatus according to claim 15, **characterized in that** the apparatus (100) further comprises a compressor (113) configured to compress the generated virtual 3D model based on spatial redundancy between at least two 2D views of the multiple 2D views.

21. The apparatus according to claim 15, **characterized in that** the apparatus (100) further comprises a first intermediate view generator (114) configured to generate at least one intermediate 2D view by interpolating at least two 2D views of the multiple 2D views, and to include the generated at least one intermediate 2D view in the multiple 2D views of the generated virtual 3D model.

22. The apparatus according to claim 15,
**characterized in that** the apparatus (100) further comprises an interpolation information generator (115) configured to generate interpolation information to facilitate interpolating - subsequent to producing the virtual 3D model - at least two 2D views of the multiple 2D views, and to include the generated interpolation information in the generated virtual 3D model.

23. An apparatus (150) for reproducing a virtual 3D model, **characterized in that** the apparatus (150) comprises:
a retriever (160) configured to retrieve a virtual 3D model comprising multiple 2D views of a 3D object, each 2D view depicting the 3D object from a different viewing position; and
a virtual 3D model player (170) configured to display the retrieved virtual 3D model by displaying at any given moment the 2D view of the multiple 2D views nearest to the viewing position at said given moment.

24. The apparatus according to claim 23, **characterized in that** the apparatus (150) further comprises a decompressor (171) configured to decompress the retrieved virtual 3D model prior to its display in response to said retrieved virtual 3D model having been compressed based on spatial redundancy between at least two 2D views of the multiple 2D views.

25. The apparatus according to claim 23,
**characterized in that** the apparatus (150) further comprises a second intermediate view generator (172) configured to generate, prior to the display of the retrieved virtual 3D model and in response to interpolation information included in the retrieved virtual 3D model, at least one intermediate 2D view by interpolating at least two 2D views of the multiple 2D views in accordance with the included interpolation information, and to include the generated at least one intermediate 2D view in the multiple 2D views of the retrieved virtual 3D model.

26. The apparatus according to claim 23, **characterized in that** the apparatus (150) further comprises a pre-processor (173) configured to perform prior to the display of the retrieved virtual 3D model at least one of:
adjusting illumination of at least one 2D view of the multiple 2D views in accordance with illumination information included in the retrieved virtual 3D model;
scaling at least one 2D view of the multiple 2D views in accordance with a given viewing distance; and
rotating at least one 2D view of the multiple 2D views in accordance with a given rotation angle.

27. The apparatus according to claim 23, **characterized in that** the apparatus (150) further comprises a video player (174) configured to play a video stream with the retrieved virtual 3D model displayed embedded in the video stream.

28. The apparatus according to claim 27, **characterized in that** the apparatus (150) further comprises a video analyzer (175) configured to periodically analyze the video stream being played and to perform at least one of displaying the 2D view of the multiple 2D views nearest to the analyzed viewing position, generating and displaying an interpolated 2D view for the analyzed viewing position, adjusting illumination of the displayed 2D view accordingly, scaling the displayed 2D view accordingly, and rotating the displayed 2D view accordingly.

29. A computer program embodied on a computer readable medium, the computer program controlling a data-processing device to perform the steps of:
generating a virtual 3D model comprising multiple 2D views of a 3D object, each 2D view depicting the 3D object from a different viewing position; and
storing the generated virtual 3D model for display retrieval.

30. A computer program embodied on a computer readable medium, the computer program controlling a data-processing device to perform the steps of:
retrieving a virtual 3D model comprising multiple 2D views of a 3D object, each 2D view depicting the 3D object from a different viewing position; and
displaying the retrieved virtual 3D model by displaying at any given moment the 2D view of the multiple 2D views nearest to the viewing position at said given moment.
